Europäisches Patentamt

(19) European Patent Office

Office européen des brevets

(11) Numéro de publication: **0 234 959**
**B1**

(12) **FASCICULE DE BREVET EUROPEEN**

(45) Date de publication du fascicule du brevet: **13.06.90**

(21) Numéro de dépôt: **87400007.8**

(22) Date de dépôt: **06.01.87**

(51) Int. Cl.⁵: **B 61 L 3/00, B 61 L 25/02**

(54) **Procédé et système de localisation d'un mobile circulant sur un réseau ferroviaire.**

(30) Priorité: **07.01.86 FR 8600117**

(43) Date de publication de la demande:
**02.09.87 Bulletin 87/36**

(45) Mention de la délivrance du brevet:
**13.06.90 Bulletin 90/24**

(84) Etats contractants désignés:
**AT BE CH DE ES GB GR IT LI LU NL SE**

(56) Documents cités:
**DE-A-2 430 368**
**FR-A-2 139 471**
**FR-A-2 274 094**
**US-A-2 432 984**
**US-A-3 947 807**

(73) Titulaire: **SOCIETE NATIONALE DES CHEMINS DE FER FRANCAIS**
**88, rue Saint-Lazare**
**F-75436 Paris Cedex 09 (FR)**

(72) Inventeur: **Bernard, Patrice**
**7, rue Fortuny**
**F-75017 Paris (FR)**
Inventeur: **Lancien, Daniel**
**55 Boulevard du Midi**
**F-93340 Le Raincy (FR)**
Inventeur: **Gazet, André**
**42, rue Marie Pia**
**F-91480 Quincy Sous Senart (FR)**

(74) Mandataire: **Battut, Michel**
**OFFICE PICARD 134, boulevard de Clichy**
**F-75018 Paris (FR)**

Courier Press, Leamington Spa, England.

## Description

La présente invention concerne un procédé de localisation d'un mobile sur un réseau, et plus particulièrement un procédé permettant de localiser avec une bonne précision la position d'un mobile sur un réseau ferroviaire, ainsi qu'un système pour la mise en oeuvre d'un tel procédè.

Pour localiser un véhicule mobile sur une voie ferrée, un procédé connu consiste à disposer des détecteurs en des points ou des secteurs déterminés du réseau, par exemple des circuits électriques, électromagnétiques ou électroniques placés sur la voie, des pédales éventuellement associées en compteurs d'essieux coopérant avec le véhicule, etc.

Cependant, ces équipements liés à l'infrastructure sont coûteux, notamment en raison du nombre élevé de détecteurs nécessaires, et l'investissement apparaît souvent peu rentable sur les lignes à faible densité de trafic. De plus, la connaissance de la position du mobile n'est précise que lorsque celui-ci se trouve à des endroits bien déterminés de la ligne; entre les passages à ces endroits, la connaissance de la localisation est imprécise et peut constituer un frein au développement de certaines applications. Enfin, la connaissance de la localisation est disponible localement au sol, mais pas directement dans le mobile lui-même. Dans certains cas, le détecteur fait connaître au mobile qu'il passe à son niveau et lui transmet des consignes concernant, par exemple, une vitesse limite ou une distance d'arrêt. Dans ces cas, à des fins de contrôle de vitesse ou de pilotage automatique, le mobile peut mettre en oeuvre une mesure de chemin parcouru mais il ne s'agit pas à proprement parler de localisation. En effet, hormis l'instant où le mobile passe audessus du détecteur, le sol ne sait pas précisément où il se trouve; quant au mobile, il sait le chemin parcouru depuis le détecteur mais ne connait pas sa position par rapport au réseau dans son ensemble, et en particulier, il ne sait pas sur quelle voie il se trouve, dans un réseau où plusieurs voies peuvent être voisines.

Un autre procédé connu consiste à utiliser une méthode de triangulation grâce à des balises, qui peuvent être fixes ou mobiles, et par exemple embarquées à bord de satellites mis sur orbite.

Ce deuxième procédé présente divers inconvénients, outre son coût élevé. En effet, la précision disponible ne permet pas de distinguer, de façon sûre, sur quelle voie d'un faisceau se trouve le mobile. La localisation exige la possibilité d'un lien, par voie radio en général, avec les balises, et les irrégularités du relief de l'infrastructure, notamment les tunnels, ne permettent pas d'obtenir une bonne couverture du réseau. Enfin, dans le cas tout au moins du radio-repérage, c'est-à-dire dans celui où c'est le sol qui acquiert la connaissance de la localisation du mobile, ce dernier ne peut avoir qu'une connaissance épisodique de sa position; il doit faire appel à l'estime à des fins de contrôle continu de la vitesse ou de pilotage automatique.

"Le brevet français n° 2.139.471 décrit un système de commande d'un véhicule se déplaçant sur une voie unique divisée en un certain nombre de sections consécutives, dans lequel l'exploration d'une base de données est asservie à la reconnaissance de balises, cette base de données contenant des données géographiques. Le système proposé à essentiellement pour but de fournir au conducteur des informations de vitesse autorisée le long du parcours.

Des transpondeurs sont disposés en série le long de la voie, qui répondent à un signal reçu d'un émetteur monté sur le véhicule. L'équipement à bord du véhicule identifie le transpondeur et effectue une comparaison avec le contenu du programme en mémoire, pour le calcul du profil de vitesse par rapport à la vitesse autorisée à cet endroit. Dans un tel système, on ne cherche pas à mesurer la distance parcourue entre les balises n-l et n, problème qui constitue l'objet de la présente invention."

"Le brevet français n° 2.274.094 décrit un système de localisation de véhicules se déplaçant sur un réseau prédéterminé de routes comportant des jonctions, en vue de retransmettre à une station fixe la position de l'ensemble des véhicules sur le réseau. Le système mis en oeuvre est essentiellement axé sur la mesure du changement de cap au passage sur un noeud et fait appel à des moyens de mesure de la distance parcourue, des moyens de détection de changement de direction, des moyens d'identification d'une jonction donnée, le tout dans le but de localiser l'emplacement du véhicule. Un dispositif de localisation est monté sur chaque véhicule et une station de base de contrôle interroge chacun des appareils mobiles embarqués, grâce à un signal d'interrogation spécifique. Un tel système ne met pas à profit la possibilité d'utiliser en bordure du réseau une implantation de repères fixes, de structure simple, comme il est proposé dans la présente invention. Il présente en outre l'inconvénient d'introduire des moyens rustiques de détection de changement de direction de type électromécanique.

Le but de l'invention est de donner à un mobile se trouvant sur un rèseau de voies ferrées une connaissance précise et continue de sa position sans nécessiter une infrastructure coûteuse, et notamment de permettre l'identification de la voie sur laquelle se trouve le mobile, parmi plusieurs voies voisines.

L'invention a pour objet un procédé permettant d'obtenir le résultat ci-dessus d'une manière fiable et peu coûteuse en évitant les inconvénients inhérents aux méthodes connues précitées.

L'invention a également pour objet un système de localisation d'un mobile sur un réseau assurant une localisation précise et continue du mobile, utilisant l'infrastructure existante du réseau, ou n'impliquant que la mise en place de repères simples et peu coûteux.

Le procédé suivant la présente invention permet la localisation d'un mobile circulant sur un réseau ferroviaire présentant des repères fixes sur la voie ou dans son voisinage, mettant en oeuvre un capteur solidaire du mobile coopérant avec les repères fixes et sensible à un signal caractéristique émis ou renvoyé par chaque repère fixe, et une base de données contenant la description d'un graphe dont les noeuds sont les repères fixes et les branches les voies les reliant, se distinguant en ce que:

- a) on mesure la distance parcourue entre l'avantdernier repère fixe détecté et le dernier

- b) on identifie la branche sur laquelle vient de circuler le mobile en sélectionnant par comparaison avec les branches du graphe partant de l'avant-dernier repère celle qui a la longueur la plus proche de la distance mesurée entre les deux derniers repères détectés.

Suivant une forme de mise en oeuvre du procédé de l'invention, le système de localisation d'un mobile circulant sur un réseau ferroviaire, présente des repères fixes sur la voie ou dans son voisinage, comprend au moins un capteur solidaire du mobile coopérant avec lesdits repères fixes et sensible à un signal caractéristique émis ou renvoyé par chaque repère fixe, un circuit de mise en forme du signal issu du capteur, des moyens pour mesurer la distance parcourue ou le temps de parcours entre les deux derniers repères fixes, et une base de données qui contient la description d'un graphe dont les noeuds sont les repères fixes et les branches les voies les reliant, permettant de connaître les branches qu'un mobile peut emprunter à la suite d'une branche donnée ainsi que la distance entre repères fixes consécutifs, et l'indication de leur signature éventuelle.

Conformément au procédé de l'invention, le capteur ou le récepteur coopère avec les repères fixes de telle sorte qu'on détecte le passage du mobile à proximité des repères fixes par le signal caractéristique qu'ils émettent ou qu'ils renvoient et, ou bien on compare la signature numèrique dudit signal caractéristique aux signatures associées aux noeuds du graphe enregistrées dans la base de données, pour en déduire la position du mobile, ou bien on mesure la distance parcourue depuis le repère fixe précédent et on la compare à la longueur de la ou des branches du graphe partant du noeud précédent, dans la base de données.

Suivant une forme préférentielle de réalisation, l'identification de chaque repère fixe est utilisée pour le recalage de la position estimée du mobile sur la voie. Conformément à une autre caractéristique avantageuse du procédé, les repères fixes sont réalisés de manière à ce que la réponse rétrodiffusée de l'onde émise par la source de rayonnement soit différente suivant le repère ou la catégorie de repère, et le traitement de la réponse permet alors de distinguer un repère parmi d'autres différents ou d'une catégorie différente.

Les signaux d'écho reçus sont instantanément traités directement sur le mobile, par des moyens appropriés embarqués, ou à distance, la liaison avec l'unité de traitement et de comparaison avec la base de données, se faisant alors par les moyens usuels, par exemple par radio.

Comme source de rayonnement, on peut utiliser notamment un radar qui permet non seulement de détecter les repères fixes, mais de mesurer la distance parcourue, et, suivant une variante de l'invention, on peut émettre plusieurs faisceaux, par exemple des faisceaux radars, au moyen de plusieurs antennes dont chacune est connectée à un radar distinct ou toutes reliées à un même radar. On peut notamment émettre deux faisceaux radar symétriques par rapport à un plan perpendiculaire à l'axe de la voie, l'un vers l'avant, l'autre vers l'arrière, par rapport au sens du déplacement du mobile. Si la première antenne émet un rayonnement faisant avec le plan de la voie un angle α, la deuxième antenne est fixée sur le mobile de manière à former avec la première un angle égal à 180° diminué de deux fois la valeur nominale de α, et on effectue la moyenne des signaux d'écho reçus.

Le dispositif conforme à la présente invention comprend:

un capteur solidaire du mobile, coopérant avec les repères fixes,

un circuit de mise en forme du signal issu du capteur,

des moyens pour mesurer la distance parcourue ou le temps de parcours,

une base de données contenant la description d'un graphe dont les noeuds sont les repères fixes et les branches les voies les reliant,

et un circuit commandé par le signal mis en forme, et connecté au moyen de mesure de la distance ou du temps et à la base de données, déterminant la position du mobile.

Suivant une forme de réalisation, le circuit commandé par le signal mis en forme détermine les branches possibles du graphe à partir de la dernière branche identifiée, et sélectionne celle dont la longueur est la plus proche de la distance mesurée entre les deux derniers repères détectés, la position étant définie par la branche sélectionnée et par la distance parcourue sur cette branche.

Il est particulièrement avantageux d'utiliser un circuit, commandé par le signal mis en forme, déterminant les branches possibles du graphe à partir d'une branche immédiatement précédente et leur donnant une vraisemblance fonction de celle de la branche amont de la branche envisagèe et de la comparaison de la longueur de la branche envisagée et de la distance mesurée, ne retenant que les n meilleures branches, n étant supérieur ou égal à 2, la position étant définie par la branche la plus vraisemblable et la distance parcourue sur cette branche.

Suivant une forme avantageuse de réalisation, le capteur est un récepteur solidaire du mobile, sensible au signal rétrodiffusé par les repères fixes et émis par une source de rayonnement solidaire du mobile balayant, au cours du déplacement, la zone où se trouvent les repères fixes.

Bien entendu, les capteurs, sources de rayonnement, circuita de mise en forme du signal, circuits de détermination des branches possibles du graphe, moyens de mesure de la distance ou du temps, et bases de données n'entrent pas dans le cadre de la présente invention, et sont d'un type connu dans la technique. Par exemple, la source de rayonnement peut être un radar, un laser, un émetteur d'ultrasons, etc, monté sur le mobile et associé à un récepteur approprié. On peut également utiliser des repères fixes coopérant avec le capteur solidaire du mobile, et par exemple des plots ou des aimants placés au voisinage immédiat d'un rail de la voie ferrée, coopérant avec une roue détectrice ou avec un détecteur de champ magnétique solidaire du mobile, respectivement.

Suivant une forme préférentielle de réalisation, le système comprend au moins un radar connecté à au moins une antenne orientée vers la voie et faisant avec elle un angle prédéterminé, l'orientation de l'antenne permettant de balayer la zone où se trouvent les repères fixes caractéristiques situés au voisinage de la voie, des moyens de traitement des signaux d'écho pour mesurer la distance parcourue depuis le point de départ et le niveau du signal, ainsi que la base de donnèes et le circuit commandé par le signal, tels qu'ils sont décrits ci-dessus.

Suivant une forme simple de réalisation, les repères fixes peuvent être constitués par les poteaux caténaires disposés le long de la voie à une distance pratiquement constante de celle-ci, dans le cas de voies électrifiées. Il est également possible, d'une manière générale, d'utiliser comme repères toutes les singularités se trouvant sur la voie ou dans son voisinage immédiat, et dont la position aura été relevée au préalable.

Conformément à une autre forme de réalisation, les repères sont constitués par des trièdres trirectangles ou des assemblages de trièdres, métalliques ou métallisés, renvoyant un écho (par exemple un écho radar) facile à distinguer de celui de l'environnement de la voie (rail, ballast, traverses et tirefonds, par exemple) par la simple mesure du niveau du signal rétrodiffusé. Le repère peut également être réalisé sous la forme d'un tube coudé, de diamètre supérieur à la longueur d'onde du faisceau radar, et placé de telle sorte que le signal émis pénètre par une extrémité et que le signal sortant par l'autre extrémité soit capté par l'antenne du radar. Dans ce cas le repère est reconnaissable à la polarisation du signal, et l'antenne réceptive est réalisée de manière à présenter la même polarisation. Ces repères sont fixés de loin en loin le long de la voie, dans le champ balayé par l'antenne du radar.

Un repère peut être élémentaire ou composite. Un repère élémentaire est caractérisé par le fait qu'on n'a pas cherché à donner une forme significative à la courbe exprimant le niveau du signal rétrodiffusé en fonction du chemin parcouru par le capteur lorsqu'il passe au-dessus du repère. Un repère composite est caractérisé par le fait qu'on a cherché à donner à cette courbe une forme particulère, soit par la longueur de la zone au-dessus de laquelle on obtient un signal rétrodiffusé remarquable, soit par le fait que cette courbe est constituée de l'association de plusieurs courbes correspondant à un repère élémentaire, cette association étant caractérisée par le nombre des réponses élémentaires, par la distance les séparant ou par une combinaison de ces facteurs. Un repère composite peut être réalisé, par exemple, par un croisillon de plaques mètalliques perpendiculaires entre elles et à une plaque métallique servant de fond, certains des alvéoles ainsi constitués étant remplis ou recouverts d'une substance absorbant le signal émis par la source de rayonnement. Une autre réalisation possible est constituée de tubes en U, l'information étant donnée par le nombre de tubes et leurs distances entre eux.

Lorsque la voie ferrée comporte une aiguille permettant soit de maintenir le mobile sur la voie directe, soit de le dévier sur une autre voie, il importe d'identifier exactement la voie sur laquelle se trouve le mobile après passage sur l'aiguille. Cette détermination peut être faite conformément à l'invention soit en déposant un repère sur chaque branche de l'aiguille à une distance différente de la pointe, soit en utilisant des repères fournissant des signaux émis ou rétrodiffusés différents sur l'une et l'autre branche, soit en ne plaçant pas de repère sur l'une des branches. Dans le premier cas, la différence de distances est de préférence supérieure au double de la marge d'erreur tolérée et la simple mesure de la distance entre le repère identifié et le dernier repère reconnu précédent permet de déterminer si le mobile se trouve sur la branche directe ou sur la branche déviée par comparaison avec le graphe du réseau enregistré dans la base de données.

Les caractéristiques et avantages de l'invention apparaîtront plus en détail dans la description ci-après relative à une forme préférentielle et non limitative de rèalisation, en référence aux dessins annexés, qui représentent:

Figure 1: schéma-bloc d'une installation conforme à l'invention.

Figure 2: vue schématique d'un repère passif utilisable dans l'invention, placé sur la voie ferrée.

Figure 3: vue en perspective d'une variante de repère.

Figure 4: vue d'un autre repère passif utilisable dans l'invention.

Figure 5: schéma d'un repère constitué par un aimant et d'un circuit de détection appropriée.

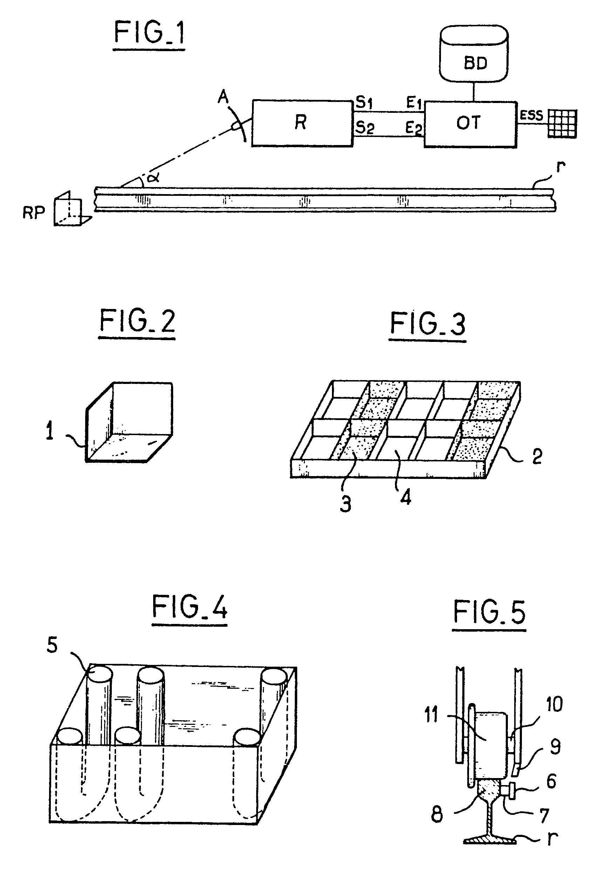

Sur la figure 1, un radar R comporte une antenne A, située à une hauteur de 60cm environ au-dessus du rail r, orientée vers celui-ci dans une direction faisant avec l'horizontale un angle prédéterminé α égal à environ 30°. Le radar R fournit sur sa sortie S1 une information de distance parcourue extraite de l'effet Doppler entre le signal émis et le signal rétrodiffusé. Il fournit sur sa sortie S2 une information donnant le niveau du signal rétrodiffusé. Les sorties S1 et S2 sont reliées respectivement aux entrées E1 et E2 d'un ordinateur de traitement OT. Cet ordinateur OT dispose, dans une base de données BD, d'une description du graphe des repères passifs RP disposés sur la voie, au voisinage immédiat du rail et dans la zone illuminée par l'antenne A lors de son passage au-dessus d'eux. L'ordinateur OT dispose également d'une entrée/sortie série ESS permettant le dialogue avec l'extérieur (clavier-écran, modem, ordinateur . . .).

Le circuit de mise en forme du signal issu de la partie récepteur du radar (non représenté) est de type usuel et peut être compris indifféremment dans le radar R ou dans l'ordinateur OT.

Le fonctionnement est le suivant: l'ordinateur de traitement OT reçoit par son entrée/sortie série ESS l'indication de sa position initiale repérée par rapport au graphe contenu dans la base de données BD. Lorsque l'engin sur lequel est monté le système de localisation se déplace, l'ordinateur de traitement OT reçoit du radar R sur son entrée E1 la valeur, signée, des déplacements élémentaires; ceci lui permet d'entretenir la position estimée.

Lorsque l'ordinateur de traitement OT reçoit du radar R sur son entrée E2 une information lui indiquant que le niveau du signal rétrodiffusé dépasse un seuil prédéfini, l'ordinateur OT note la position estimée. Si cette position correspond, à une marge près comprise dans des limites de tolérance prédéfinies, à la position d'un repère pasaif RP telle qu'elle est indiquée dans la base de données BD, on admet que l'écho correspond bien au repère et on corrige la position estimée de la valeur trouvée pour la marge.

La figure 2 représente un repère élémentaire (1) constitué par un trièdre métallique tandis que la figure 3, montre un repère composite comprenant un assemblage (2) de trièdres métalliques formant un ensemble à plusieurs alvéoles dont certains (3) sont enduits d'une aubstance absorbant le signal émis par le radar tandis que d'autres (4) ne le sont pas. La figure 3 montre des repères (5) constitués par des tubes coudés en U que l'on place verticalement près de la voie.

L'utilisation de repères composites permet de distinguer chaque repère passif RP par une "signature" reconnaissable. On peut envisager que chaque repère passif RP ait une signature permettant de le distinguer de tous les autres ou une signature permettant seulement de le distinguer des repères passifs de son voisinage avec lesquels une confusion serait possible.

En particulier, l'utilisation de repères composites permet de distinguer la branche directe et la branche déviée d'une aiguille sans qu'il soit nécessaire de s'appuyer sur la différence entre la distance séparant le repère précédent et le repère passif se trouvant dans la branche directe, d'une part, et la distance séparant le repère précédent et le repère passif se trouvant dans la branche déviée, d'autre part. De la même façon, la signature d'un repère passif peut également servir à indiquer le sens de parcours de la voie.

La base de données BD peut contenir, outre les informations permettant de connaître la position des différents repères passifs, l'indication de leur signature.

Comme indiqué précédemment, le radar R se trouve à une faible hauteur au-dessus du rail. Cette hauteur peut varier et être comprise par exemple entre 30cm et 1,50m, et de préférence entre 40 et 60cm. L'angle α du faisceau radar avec le plan de la voie est de préférence inférieur à 45° et peut par exemple être voisin de 30° pour fournir une mesure précise et fiable. La position de l'antenne du radar est de préférence au dessus du rail, mais elle peut varier par rapport à l'axe de la voie, surtout si on n'a pas le souci de faire face à un possible enneigement de la voie. Le radar R pourrait, en particulier, se trouver au milieu de la voie; dans ce cas, les repères passifs RP devraient également s'y trouver.

Si toutefois on préfère diaposer le radar R au-dessus d'une file de rails, il peut être commode de disposer des repères passifs RP au voisinage de chacune des files de rails. Dans ce cas, il peut également être avantageux d'implanter les repères passifs sur chacune des files de rails sensiblement au droit l'un de l'autre; il peut alors également être commode de leur donner des signatures associées, par exemple identiques entre elles, ou bien identiques, au sens de la circulation près.

Un souci de disponibilité peut amener à disposer un radar au-dessus de chacune des files de rails. Dans le cas où les deux radars sont en bon état de fonctionnement, la comparaison des informations fournies par chacun d'eux sur sa sortie S1 donne une autre source de renseignements permettant, soit de recaler la position estimée, soit de vérifier sa vraisemblance. En effet, à l'imprécision près de la mesure du chemin parcouru, et à l'erreur près introduite par un éventuel dévers de la voie, la différence entre la mesure du chemin parcouru sur chacune des deux files de rails donne, après division par l'écartement de la voie, la variation de cap (en radians) depuis l'origine des mesures. Si l'on a pris soin de faire figurer dans la base de données BD l'orientation de la voie à certains endroits, on a là une possibilité de test de cohérence. Une variante consiste à préciser dans la base de données le début et la fin de courbes remarquables et la différence de longueur des files de rails entre ces deux points (ce qui supprime l'influence du dévers). La différence des estimations de chemin parcouru à partir des sorties S1 des deux radars permet par comparaison à l'indication fournie par la base de données BD, un contrôle intéressant de la validité de la position et du bon fonctionnement du traitement. En pratique, il n'est possible de repérer avec certitude que les courbes dont le rayon est inférieur au rapport entre l'écartement des deux radars et deux fois leur précision relative.

Comme le montre la figure 5, un aimant (6) est fixé sur le rail (r) par l'intermédiaire d'un étrier (7) maintenant l'aimant à 3cm environ du rail. La fixation est faite par un moyen usuel, par exemple par collage, sur le côté extérieur du champignon (B) du rail.

Un détecteur (9) électromagnétique est fixé sur la boîte d'essieu (10) de la roue (11) de telle sorte que la distance entre l'aimant (6), orientè verticalement, et le détecteur (9) soit comprise entre 1 et 5cm environ, lors du passage au-dessus de l'aimant. Le détecteur (9) est protégé par un bouclier (non représenté).

L'aimant (6) est un aimant permanent de type usuel, par exemple du type en alliage à base d'aluminium, nickel et cobalt présentant une bonne stabilité dans le temps. Le champ magnétique ainsi créé est détecté par le détecteur (9) qui peut comporter par exemple une bobine à réluctance variable, un capteur à courant de Foucault, ou un capteur à effet Hall, suivant un montage connu (non représenté).

L'aimant permanent peut être unique, mais il est également possible de monter plusieurs aimants à quelques centimètres les uns des autres et d'orienter leurs polarités de manière prédéterminée afin de constituer une signature identifiable par le détecteur.

On a supposé dans ce qui précède que la base de données BD était embarquée à bord du mobile que l'on cherche à localiser. Il est bien évident que rien de fondamental ne se trouve modifié si cette base de données se trouve à distance, par exemple si elle se trouve à terre et qu'il existe une liaison radio entre l'ordinateur de traitement OT à bord du mobile et le système terrestre qui gère cette base de données. Rien de fondamental non plus n'est modifié si cette base de données se trouve à terre mais que les extraits concernant la région où se trouve le mobile lui sont transmis, en tant que de besoin, par une liaison radio ou des balises ponctuelles par exemple. Une autre utilisation intéressante de la radio est la diffusion des modifications concernant la présence de repères passifs, de leur position ou de leur signature, intervenues depuis l'époque à laquelle correspond la version de la base de données BD dont dispose le mobile. L'invention couvre bien entendu ces diverses variantes.

## Revendications

1. Procédé de localisation d'un mobile circulant sur un réseau ferroviaire présentant des repères fixes (R) sur la voie ou dans son voisinage, mettant en oeuvre un capteur R solidaire du mobile coopérant avec les repères fixes (RP) et sensible à un signal caractéristique émis ou renvoyé par chaque repère fixe (RP), et une base de données (BD) contenant une information géographique relative à le voie, caractérisé en ce que cette base de données contient la description d'un graphe dont les noeuds sont les repères fixes (RP) et les branches les voies les reliant, et
   a) on mesure la distance parcourue entre l'avant-dernier repère fixe détecté et le dernier
   b) on identifie la branche sur laquelle vient de circuler le mobile en sélectionnant par comparaison avec les branches du graphe partant de l'avant-dernier repère celle qui a la longueur la plus proche de la distance mesurée entre les deux derniers repères détectés.
2. Procédé de localisation d'un mobile selon la revendication 1, caractérisé en ce que, lorsque la base de données (BD) permet d'identifier sans ambiguïté la branche sur laquelle se trouve le mobile parce que c'est la seule faisant suite à la branche parcourue précédemment, il suffit pour connaître la position du mobile sur cette branche d'ajouter la distance parcourue depuis le dernier repère.
3. Procédé de localisation d'un mobile selon la revendication 1, caractérisé en ce que l'identification de la balise ou repère fixe (RP) par sa signature est utilisée pour valider l'identification déduite de la mesure de la distance parcourue.
4. Procédé selon l'une quelconque des revendications 1 à 3, caractérisé en ce que la détection et/ou l'identification de chaque repère fixe (RP) est utilisée pour le recalage de l'estimation du chemin parcouru par le mobile sur la voie.
5. Système de localisation d'un mobile circulant sur un réseau ferroviaire, présentant des repères fixes (RP) sur la voie ou dans son voisinage, comprenant au moins un capteur R solidaire du mobile coopérant avec lesdits repères fixes (RP) et sensible à un signal caractéristique émis ou renvoyé par chaque repère fixe (RP), un circuit de mise en forme du signal (OT) issu du capteur, des moyens pour mesurer la distance parcourue ou le temps de parcours entre les deux derniers repères fixes, et une base de données (BD) contenant une information géographique relative à la voie, caractérisé en ce que cette base de données contient la description d'un graphe dont les noeuds sont les repères fixes (RP) et les branches les voies les reliant, permettant de connaître les branches qu'un mobile peut emprunter à la suite d'une branche donnée ainsi que la distance entre repères fixes consécutifs, et l'indication de leur signature éventuelle.
6. Système selon la revendication 5, caractérisé en ce que le capteur est un récepteur solidaire du mobile, sensible au signal rétrodiffusé par les repères fixes (RP) et émis par une source de rayonnement A solidaire du mobile balayant la zone où se trouvent les repères fixes (RP) au cours du déplacement.
7. Système selon la revendication 6, caractérisé en ce qu'il comporte au moins un radar (R) solidaire du mobile comprenant des moyens de mesure de l'effet Doppler résultant du déplacement du mobile, connecté à au moins une antenne (A) orientée de manière à balayer la zone où se trouvent les repères fixes (RP) et connecté au circuit de mise en forme du signal (OT).

## Patentansprüche

1. Ortungsverfahren eines sich auf einen mit auf der Schiene oder in der Nähe ortfest angeordneten Marken (RP) ausgerüsteten Schienennetzes bewegenden Fahrzeuges, welches einen Taster R einsetzt, der mit dem mit den ortfesten Marken (RP) zusammenwirkenden Fahrzeug verbunden ist und gegen ein unterscheidenden, aus jeder ortfesten Marke (RP) ausgesendetes oder rückgesendetes Signal empfindlich ist, und eine Ortungsdaten über die Schiene enthaltende Datenbasis (BD), dadurch gekennzeichnet dass diese Datenbasis enthält das Verzeichnis einer Graphe deren Knoten die ortfesten Marken (RP) darstellen und deren Zweige die die Knoten verbindenden Schienen darstellen, und:

a) die zwischen der vorletzten und der letzten ortfesten Marke befahrenen Fahrstrecke gemessen wird,

b) nach einem Vergleich mit den von der vorletzter Marke ausgehenden Zweigen der Graphe, wird der gerade vom Fahrzeuge befahrene Zweig durch Auswahl desjenigen Zweiges derer Länge am nächsten der zwischen die zwei letzten erfassenen Marken gemessenen Abstand messt erkannt.

2. Ortungsverfahren eines Fahrzeuges nach Anspruch 1, dadurch gekennzeichnet dass, wenn die Dantenbasis (BD) die eindeutige Kennungsgebung desjenigen Zweiges ermöglicht worauf der Fahrzeug liegt, wegen er der einzige den vorher befahrenen folgenden Zweig darstellt, zur Kennung der Fahrzeugsstellung auf diesem Zweig genügt es die seit der letzten Marke befahrene Fahrstrecke zu addieren.

3. Ortungsverfahren nach Anspruch 1, dadurch gekennzeichnet dass die Kennungsgebung der ortfesten Bake bzw. Marke (RP) mittels ihrer Signatur ist zur Gültigbestätigung der aus der Messung der Fahrstrecke erhaltenen Kennungsgebung ausgewertet.

4. Ortungsverfahren nach einem der Ansprüche 1 bis 3, dadurch gekennzeichnet dass die Erfassung und/oder die Kennungsgebung jeder ortfesten Marke (RP) ist zur Bewertungsnachjustierung der vom Fahrzeuge auf die Schiene befahrene Fahrstrecke.

5. Ortungssystem eines sich auf einen mit auf der Schiene oder in der Nähe ortfest angeordneten Marken (RP) ausgerüsteten Schienennetzes bewegenden Fahrzeuges, mit mindestens einem Taster R, der mit dem mit den ortfesten Marken (RP) zusammenwirkenden Fahrzeug verbundenen ist und gegen ein unterscheidenden, aus jeder ortfesten Marke (RP) ausgesendetes oder rückgesendetes Signal empfindlich ist, mit einem vom Taster nachgeshalteten Signalaufbereitungskreis (OT), mit Messungsmittels zur Messung des befahrenen Fahrstrecke oder der Fahrzeit zwischen den zwei letzten ortfesten Marken, und eine Ortungsdaten über die Schiene enthaltende Datenbasis (BD), dadurch gekennzeichnet dass diese Datenbasis enthält das Verzeichnis einer Graphe deren Knoten die ortfesten Marken (RP) darstellen und deren Zweige die die Knoten verbindenden Schienen darstellen, so dass die für den Fahrzeug erlaubten einen bestimmten Zweig folgenden Zweige erkannt werden sowie der Abstand zwischen nachfolgenden ortfesten Marken une die Angabe ihrer etwaigen Signatur.

6. Ortungssystem nach Anspruch 5, dadurch gekennzeichnet dass der Taster ist ein mit dem Fahrzeug verbundenen Empfänger, der gegen das von den ortfesten Marken (RP) aus rückgesendete und von einer Strahlungsquelle A ausgesendete Signal emfindlich ist, Strahlungsquelle die während der Bewegung den Bereich wo die ortfesten Marken (RP) liegen abtastet.

7. Ortungssystem nach Anspruch 6, dadurch gekennzeichnet dass das system mindestens einen mit dem Fahrzeug verbundenen Radar (R) aufweist, welches Messungsmitteln zur Messung des aus der Fahrzeugsbewegung resultierenden Dopplereffekts enthält und der mit mindestens einer Antenne (A) angeschlossen ist, die zur Abtastung des Bereichs der ortfesten Marken (RP) eingestellt sind und am Signalverarbeitungskreis (OT) angeschlossen sind.

## Claims

1. A process for locating a mobile travelling over a railway network comprising fixed references (RP) on the track or its vicinity, using a sensor (R) attached to the mobile cooperating with the fixed references (RP) and sensitive to a characteristic signal transmitted by or returned from each fixed reference (RP) and a data base (BD) containing a geographical information relating to the track, characterized in that this data base contains the description of a graph, the nodes of which are the fixed references (RP) and the branches are the tracks connecting them together and in that:

a) the distance travelled between the last and the last but one fixed references detected is measured;

b) the branch over which the mobile has just been travelling is identified by comparatively selecting among the branches of the graph starting from the last but one reference that one which has a length which is the closest to the distance measured between the last two detected references.

2. A process for locating a mobile according to claim 1, characterized in that, when the data base (BD) allows unambiguously the identity of the branch upon which the mobile happens to be located, because it is the only one following to the precedently travelled branch, it is enough to add the distance covered since the last reference in order to have a knowledge of the position of the mobile.

3. A process for locating a mobile according to claim 1, characterized in that, the identification of the beacon or fixed reference (RP) by its signature is used to validate the identification derived from the measure of the travelled distance.

4. A process according to any one of claims 1 to 3, characterized in that the detection and/or the identification of each fixed reference (RP) is used for the evaluation of the distance covered by the mobile on the track.

5. A process for locating a mobile travelling over a railway network, comprising fixed references (RP) on the track or its vicinity, including at last one sensor (R) attached to the mobile cooperating with said fixed references (RP) and sensitive to a characteristic signal transmitted by or returned from each fixed reference (RP), a signal shaping circuit for the signal (OT) derived from the sensor, means for measuring the distance travelled or the time distance between the last two fixed references, and a data base (BD) containing a geographical information relating to the track, characterized in that this data base contains the description of a graph, the nodes of which are the fixed references (RP) and the branches are the tracks connecting them together, allowing to know the branches that a mobile may make use of, following a given branch, as well as the distance between the successive fixed references and the indication of their possible signature.

6. A process according to claim 5, characterized in that the sensor is a receiver attached to the mobile, sensitive to a back-transmitted signal from the fixed references (RP) and transmitted by a radiating source (A) attached to the mobile, scanning the area where the fixed references (RP) are located during the travelling.

7. A process according to claim 6, characterized in that it comprises at least one radar (R) attached to the mobile, including means for measuring the Doppler effect resulting from the movement of the mobile, connected to at least one antenna (A) oriented in such a way as to scan the area where the fixed references (RP) happen to be and connected to the signal shaping circuit (OT).

# FIG.1

# FIG.2

# FIG.3

# FIG.4

# FIG.5